Europäisches Patentamt

European Patent Office

Office européen des brevets

(19)

(11) Numéro de publication : **0 044 261**
**B1**

(12) **FASCICULE DE BREVET EUROPÉEN**

(45) Date de publication du fascicule du brevet : **15.08.84**

(51) Int. Cl.³ : **C 09 H 5/00**

(21) Numéro de dépôt : **81420101.8**

(22) Date de dépôt : **07.07.81**

(54) **Procédé de préparation de solution de gélatine soluble à froid et solution de gélatine obtenue par ce procédé.**

(30) Priorité : **08.07.80 FR 8015433**

(43) Date de publication de la demande :
**20.01.82 Bulletin 82/03**

(45) Mention de la délivrance du brevet :
**15.08.84 Bulletin 84/33**

(84) Etats contractants désignés :
**AT BE CH DE FR GB IT LI LU NL SE**

(56) Documents cités :
**DE-C- 297 112**
**FR-A- 1 095 387**
**GB-A- 845 274**
**GB-A- 2 023 644**
**US-A- 3 608 083**

(73) Titulaire : **Venditti, Gaetan**
**10, rue Frères Benoit**
**Oullins, Rhône (FR)**
**Noale, Gerard**
**Route de Charly**
**Saint-Genis-Laval, Rhône (FR)**

(72) Inventeur : **Venditti, Gaetan**
**10, rue Frères Benoit**
**Oullins, Rhône (FR)**
Inventeur : **Noale, Gerard**
**Route de Charly**
**Saint-Genis-Laval, Rhône (FR)**

(74) Mandataire : **Maureau, Bernard et al**
**Cabinet GERMAIN & MAUREAU Le Britannia - Tour C**
**20, Boulevard Eugène Déruelle**
**F-69003 Lyon (FR)**

Jouve, 18, rue St-Denis, 75001 Paris, France

**Description**

La gélatine est un produit obtenu par hydrolyse partielle du collagène contenu dans la peau, le tissu conjonctif et les os des animaux.

Une gélatine se caractérise par sa viscosité, sa force en gelée et sa température de gélification en fonction de sa concentration.

Les solutions de gélatine se présentent sous forme de gel à froid et sous forme de liquide à chaud.

Ces solutions peuvent être séchées et se présentent alors sous forme solide, et notamment sous forme de poudre fine, grains, plaques etc...

Les gélatines étaient, il y a quelques années, fréquemment utilisées dans de nombreux domaines de l'industrie et du bâtiment, dans le cartonnage, la chapellerie, le textile, le bois, ou encore pour la réalisation de peintures ou de papiers peints.

Pour utiliser des gélatines, il convient de les chauffer pour les amener à l'état liquide.

Compte tenu du coût d'exploitation des installations de chauffage, celles-ci sont le plus souvent supprimées quand cela est possible. Les gélatines ont donc été le plus souvent abandonnées au profit de produits utilisables à froid.

Cette nécessité de chauffage interdit la possibilité de préparation industrielle et le stockage de formulations élaborées. En outre, dans le domaine du bâtiment, les produits sont utilisés de plus en plus souvent prêts à l'emploi, ce qui n'est pas possible avec des gélatines.

La nécessité de chauffage des gélatines pour les amener à l'état liquide peut également exclure certains mélanges avec des produits sensibles à la chaleur.

Ainsi donc, l'utilisation actuelle des gélatines est limitée à quelques applications précises et l'évolution technique s'est traduite par un abandon des gélatines au profit des émulsions vinyliques ou autres produits utilisables à froid.

Les seules solutions de gélatines liquides à froid sont d'application très limitées et peuvent être considérées comme des cas particuliers :

Selon une première possibilité, une solution est préparée contenant une gélatine très diluée (moins de 10 %) en présence d'acide nitrique. La dilution de la gélatine ainsi que la présence d'acide nitrique limitent considérablement le champ d'application d'une telle solution.

Selon une autre possibilité permettant d'obtenir une solution liquide à froid, de la gélatine est dénaturée par traitement à la chaux, complété par une dégradation enzymatique. Outre le fait que la solution ne possède pas les propriétés d'une gélatine traditionnelle, il se pose le problème de la continuation de la dégradation du produit et de la conservation de celui-ci.

Le brevet français 1 095 387 concerne un procédé de préparation de solutions concentrées de gélatine restant fluides à basse température. Ce procédé consiste à chauffer dans un autoclave la solution de gélatine avec une quantité de l'ordre de 0,1 à 5 ‰ d'un composé azoté tel qu'une amine ou un composé hétérocycle azoté, l'amine hétérocyclique étant une amine aromatique telle que l'aniline, la naphtylamine ou la diméthylaniline.

Il convient de remarquer que ce procédé nécessite des moyens de mise en œuvre très importants.

Le but de l'invention est de fournir une solution de gélatine liquide à froid possédant les propriétés des gélatines traditionnelles, pouvant être conservée longtemps, et préparée de façon simple.

A cet effet, le procédé qu'elle concerne consiste à additionner à une gélatine une quantité de benzoate de sodium suffisante pour influer sur le point de gélification, et dont la concentration permet le réglage du point de gélification.

Si l'on part d'une solution de gélatine liquide à chaud, il suffit d'incorporer à celle-ci une quantité de benzoate cristallisé variant de 25 % à 100 % du poids sec de la gélatine, suivant la nature de celle-ci et la concentration souhaitée.

Dans la mesure où la gélatine se présente sous forme séchée telle que grains, perles etc..., il convient de faire fondre le produit dans l'eau et à chaud pour l'amener à la concentration désirée, afin d'obtenir une solution à laquelle est incorporé du benzoate cristallisé de la façon décrite précédemment.

Ces deux modes de mise en œuvre du procédé permettent de former une solution restant liquide et stable à froid.

Dans la mesure où la gélatine se présente sous forme de poudre fine, il est procédé au mélange à sec de celle-ci avec du benzoate de sodium cristallisé, dans des proportions sensiblement égales en poids pour les deux composants en tenant compte des caractéristiques de la gélatine.

On obtient ainsi une poudre soluble immédiatement dans l'eau et à froid et dont la solution reste liquide.

Dans les différents cas, les produits obtenus gardent les propriétés intrinsèques des gélatines tout en présentant l'avantage de rester liquides, si l'on part de liquides, ou être solubles instantanément à froid, si l'on part de solides, et de demeurer liquides après solubilisation.

Il est à noter que les gélatines n'ayant pas subi de choc thermique ont, à concentration égale, des propriétés nettement supérieures à celles obtenues par dissolution des produits secs après élévation en température.

En outre, la présence de benzoate de sodium procure à la solution obtenue une excellente stabilité dans le temps, et lui confère des propriété bactéricides.

La gélatine obtenue conformément au procédé selon l'invention est soluble avec tous les produits solubles dans l'eau et même avec certains produits non solubles dans l'eau, grâce à la présence de gélatine et de benzoate de sodium.

Cette solution peut être utilisée telle quelle et à froid dans toutes les applications antérieures connues des gélatines, ou servir de base à l'obtention de produits plus élaborés et prêts à l'emploi pouvant être conservés, stockés, puis utilisés à froid, tels que colles, adhésifs, peintures et enduits, apprêts pour tissus, durcisseurs de fond etc...

Il est donné, ci-après, deux exemples de solutions de gélatines réalisées respectivement à partir de colles d'os et de colles de peaux. Dans chaque exemple sont envisagées plusieurs concentrations de benzoate de sodium pour chaque concentration en gélatine.

Il est remarquable de noter que le mélange est liquide à la température ambiante, et que, pour des concentrations élevées en benzoate de sodium, la température de gélification est inférieure à 0 °C.

### I. Colle d'os

| N° de la solution | concentration en colle d'os g/l | concentration en benzoate g/l | température de gélification | viscosité en Pa.s à 18°C |
|---|---|---|---|---|
| 1 | 200 | 0 | + 18°C | – |
| 2 | 200 | 50 | + 9°C | $45 \times 10^{-3}$ |
| 3 | 200 | 100 | + 4°C | $40 \times 10^{-3}$ |
| 4 | 200 | 150. | 0°C | $40 \times 10^{-3}$ |
| 5 | 400 | 0 | + 24°C | – |
| 6 | 400 | 100 | + 9°C | $180 \times 10^{-3}$ |
| 7 | 400 | 200 | + 4°C | $140 \times 10^{-3}$ |
| 8 | 400 | 300 | – 6°C | $140 \times 10^{-3}$ |

### II. Colle de peau

| N° de la solution | concentration en colle de peau g/l | concentration en benzoate g/l | température de gélification | viscosité en Pa.s à 18°C |
|---|---|---|---|---|
| 9 | 200 | 0 | + 20°C | – |
| 10 | 200 | 150 | + 3°C | $135 \times 10^{-3}$ |
| 11 | 300 | 0 | + 21°C | – |
| 12 | 300 | 225 | – 6°C | $410 \times 10^{-3}$ |

**Revendications**

1. Procédé de préparation d'une gélatine liquide à froid, caractérisé en ce qu'il consiste à additionner à une gélatine une quantité de benzoate de sodium suffisante pour influer sur le point de gélification, et dont la concentration permet le réglage du point de gélification.

2. Procédé selon la revendication 1, caractérisé en ce que, dans la mesure où l'on part d'une solution de gélatine liquide à chaud, il consiste à incorporer à celle-ci la quantité de benzoate cristallisé.

3. Procédé selon la revendication 1, caractérisé en ce que, dans la mesure où la gélatine se présente sous forme séchée, telle que grains, perles, il consiste à faire fondre la gélatine dans de l'eau et à chaud, afin d'obtenir une solution dans laquelle est incorporée la quantité de benzoate cristallisé.

4. Procédé selon la revendication 1, caractérisé en ce que, dans la mesure où la gélatine se présente sous forme de poudre fine, il consiste à mélanger à sec cette poudre avec du benzoate de sodium cristallisé, dans des proportions égales en poids pour les deux composants.

5. Procédé selon l'une quelconque des revendications 1 à 4, caractérisé en ce que la quantité de benzoate de sodium cristallisé entrant dans la solution est comprise entre 25 % et 100 % du poids sec de gélatine.

6. Solution obtenue par la mise en œuvre du procédé selon l'une quelconque des revendications 1 à 5.

7. Utilisation de la solution selon la revendication 6, pour l'obtention de produits plus élaborés et prêts à l'emploi pouvant être conservés, stockés, puis utilisés à froid, tels que colles, adhésifs, peintures, enduits, durcisseurs de fond, apprêts pour tissus.


## Claims

1. A method for preparing in liquid gelatin in the cold state, characterised in that it consists in adding to a gelatin a quantity of sodium benzoate which is sufficient to affect the point of gelation and the concentration of which enables the point of gelation to be regulated.

2. A method as claimed in Claim 1, characterised in that insofar as a liquid gelatin solution in the hot state is taken as a basis, it consists in incorporating in this solution the quantity of crystallised benzoate.

3. A method as claimed in Claim 1, characterised in that insofar as the gelatin is present in dried form, such as grains or pearls, it consists in dissolving the gelatin a heated state in water so as to obtain a solution in which the quantity of crystallised benzoate is incorporated.

4. A method as claimed in Claim 1, characterised in that insofar as the gelatin is present in the form of a fine powder, it consists in mixing this powder in the dry state with crystallised sodium benzoate in equal proportions by weight for the two components.

5. A method as claimed in any one of Claims 1 to 4, characterised in that the quantity of crystallised sodium benzoate used in the solution is between 25 % and 100 % of the dry weight of the gelatin.

6. A solution obtained by performing the method as claimed in any one of Claims 1 to 5.

7. Use of the solution as claimed in Claim 6, for obtaining products which are more elaborate and ready for use, which can be preserved, stored, then used in the cold state, such as glues, adhesives, paints, coatings, base hardeners, finishing agents for fabrics.


## Ansprüche

1. Verfahren zur Herstellung einer in der Kälte flüssigen Gelatine, dadurch gekennzeichnet, daß einer Gelatine Natriumbenzoat in einer Menge zugesetzt wird, die zur Beeinflussung des Gelpunkts ausreicht, und dessen Konzentration die Steuerung des Gelpunkts ermöglicht.

2. Verfahren nach Anspruch 1, dadurch gekennzeichnet, daß ausgehend von einer in der Wärme flüssigen Gelatinelösung in diese die Menge kristallinen Benzoats eingearbeitet wird.

3. Verfahren nach Anspruch 1, dadurch gekennzeichnet, daß ausgehend von einer Gelatine in getrockneter Form, wie in Form von Körnchen oder Perlen, die Gelatine in Wasser und in der Wärme geschmolzen wird unter Bildung einer Lösung, in die die Menge kristallinen Benzoats eingearbeitet wird.

4. Verfahren nach Anspruch 1, dadurch gekennzeichnet, daß ausgehend von einer Gelatine in Form eines feinteiligen Pulvers dieses Pulver in der Trockne mit kristallinem Natriumbenzoat vermischt wird, und zwar in gleichen Gewichtsmengen der beiden Bestandteile.

5. Verfahren nach einem der Ansprüche 1 bis 4, dadurch gekennzeichnet, daß die in die Lösung eingebrachte Menge kristallinen Natriumbenzoats zwischen 25 und 100 %, bezogen auf das Trockengewicht der Gelatine, beträgt.

6. Lösung erhalten nach dem Verfahren gemäß einem der Ansprüche 1 bis 5.

7. Verwendung der Lösung nach Anspruch 6 zur Herstellung von Weiterverarbeitungsprodukten, die anwendungsfertig sind und in der Kälte konserviert, gelagert und verwendet werden können, wie Leime, Klebstoffe, Bilder, Verputze, Untergrundhärter, Soßenbindemittel und Gewebeappreturen.